# EUROPÄISCHE PATENTSCHRIFT

(11) **EP 0 964 007 B1**
(45) Veröffentlichungstag und Bekanntmachung des Hinweises auf die Patenterteilung: **11.07.2001**
(21) Anmeldenummer: 99109279.2
(22) Anmeldetag: 27.05.1999
(51) Int. Cl.: C08F 18/08, C08F 261/04, C09J 131/04, C09J 151/00

(54) **Verfahren zur Herstellung von Klebemitteln mit verbesserter Adhäsion**
Process for the preparation of adhesives with improved adhesion
Procédé de préparation d' adhésifs à adhésion améliorée

(30) Priorität: 04.06.1998 DE 19825052
(43) Veröffentlichungstag der Anmeldung: 15.12.1999
(73) Patentinhaber: WACKER-CHEMIE GMBH, D-81737 München (DE)
(72) Erfinder: Köhler, Thomas, Dr., 84556 Kastl (DE); Höfler, Heinz, 84489 Burghausen (DE)
(74) Vertreter: Schuderer, Michael, Dr.

(56) Entgegenhaltungen:
- EP-A- 0 391 398
- EP-A- 0 761 697
- EP-A- 0 841 351
- DE-A- 2 158 604
- DE-A- 19 620 817
- GB-A- 1 397 928
- US-A- 3 562 229
- US-A- 5 747 578

## Beschreibung

Die Erfindung betrifft ein Verfahren zur Herstellung von Klebemitteln mit verbesserter Adhäsion sowie die Verwendung der damit erhältlichen Klebemittel in Papier-, Verpackungs-, Holz- und Textilklebstoffen sowie in Bauklebern.

Polyvinylalkohol-stabilisierte Vinylacetat-Ethylen-Copolymere werden in Form deren wässrigen Dispersionen häufig zur Verklebung von Papier bzw. Verpackungsmaterialien eingesetzt. Nachteilig ist allerdings, daß die Adhäsion zur Verklebung mit Kunststoffoberflächen häufig nicht ausreichend ist. Für gewöhnlich werden zur Verbesserung der Adhäsion weichmachende Zusätze zugegeben, das Klebemittel mit Polyacrylatdispersion modifiziert oder durch den Einbau von größeren Mengen Ethylen in das Vinylacetat-Ethylen-Copolymere dessen Glasübergangstemperatur herabgesetzt. Nachteilig bei diesen Maßnahmen ist allerdings die deutliche Verminderung der Kohäsion der Klebemittel.

Es bestand somit die Aufgabe, die Adhäsion von Klebemitteln, insbesondere auf der Basis von Polyvinylalkohol-stabilisierten Vinylacetat-Ethylen-Copolymeren, zu verbessern, ohne die eben genannten Nachteile in Kauf nehmen zu müssen.

Überraschenderweise wurde gefunden, daß sich durch Copolymerisation mit Vinylestern von alpha-verzweigten, tertiären Monocarbonsäuren mit 11 C-Atomen die Adhäsion der Klebemittel deutlich steigern läßt, ohne einen dramatischen Abfall der Kohäsion zu erhalten.

Die Verwendung von Vinylestern alpha-verzweigter, tertiärer Monocarbonsäuren zur Herstellung von Terpolymerdispersionen mit Vinylacetat und Ethylen ist bekannt. In der Patentliteratur ist bisher der Einsatz von Vinylestern von alpha-verzweigten Carbonsäuren mit 5, 9 oder 10 C-Atomen beschrieben (VeoVa5, VeoVa9 und VeoValO, Handelsnamen der Firma Shell); insbesondere zur Verbesserung der Alkali und Lichtbeständigkeit, sowie zur Verringerung der Wasseraufnahme der Polymeren.

Aus der JP-A 07113069 (Derwent-Abstract AN 95-196794) sind VeoVa9/Ethylen-Copolymerdispersionen zur Verklebung von Polypropylenoberflächen bekannt und aus der JP-A 05025449 (Derwent-Abstract 93-080621) wässrige VeoVa10/Ethylen-Copolymerdispersionen zum Kleben von Polyethylenschäumen. Aus der JP-A 58149970 (Derwent-Abstract AN 83-786760) sind wässrige Vinylester/Ethylen-Copolymerdispersionen als Klebmittel zum Kleben hydrophober Materialien bekannt, wobei als Vinylester bevorzugt Vinylacetat, Vinylpropionat, Vinyllaurat und VeoVa10 verwendet werden. Klebemittel-Abmischungen aus Alkylphenolharzen und wässrigen Vinylester/Ethylen-Copolymerdispersionen sind aus der JP-A 57207662 (Derwent-Abstract AN 83-11223K) bekannt, wobei als Vinylester Vinylacetat, Vinylpropionat und VeoVa10 bevorzugt werden. Die mit den erfindungsgemäßen Klebmitteln hergestellten Klebungen zeichnen sich durch eine erhöhte Wasserbeständigkeit aus. In der JP-A 01126251 (Derwent-Abstract AN 89-188346) wird beschrieben, die Eigenschaften zementärer Massen durch Zusatz von wäßrigen Dispersionen von Terpolymeren aus Ethylen/Vinylacetat/Versaticsäure-Vinylestern mit 9 bis 11 C-Atomen zu verbessern.

In der EP-A 315278 sind Vinylacetat-Copolymere mit VeoVa9 oder VeoVa10, in der EP-A 431656 Acrylat-Copolymere mit VeoVa9 und gegebenenfalls VeoVa10, in der EP-A 486110 Acrylat/VeoVa10-Copolymere und in der EP-A 516202 Acrylat/VeoVa5-Copolymere jeweils als Beschichtungsmittel beschrieben.

Gegenstand der Erfindung ist die Verwendung von Copolymerisaten, in Form deren wässrigen Dispersionen oder in Wasser redispergierbaren Dispersionspulver, welche durch Emulsionspolymerisation, und gegebenenfalls Trocknung der damit erhältlichen Dispersion, einer Comonomermischung enthaltend
a) ein oder mehrere Monomere aus der Gruppe der Vinylester von unverzweigten und verzweigten Carbonsäuren mit 1 bis 10 C-Atomen, der Ester der Acrylsäure und Methacrylsäure mit verzweigten und unverzweigten Alkoholen mit 1 bis 12 C-Atomen, Vinylaromaten, Vinylhalogenide und alpha-Olefine und
b) 0.01 bis 50 Gew%, bezogen auf das Gesamtgewicht der Comonomeren, eines Vinylesters von alpha-verzweigten, tertiären Monocarbonsäuren mit 11 C-Atomen, in Gegenwart von
c) 0.1 bis 15 Gew%, bezogen auf das Gesamtgewicht der Comonomeren, Polyvinylalkohol, erhalten werden,
als Klebemittel mit verbesserter Adhäsion für Papierklebstoffe, Verpackungsklebstoffe, Buchbindeklebstoffe, Holzklebstoffe und als Klebemittel für Fasermaterialien.

Vorzugsweise werden 2 bis 15 Gew%, bezogen auf das Gesamtgewicht der Comonomeren, eines Vinylesters von alpha-verzweigten, tertiären Monocarbonsäuren mit 11 C-Atomen mit einem oder mehreren Monomeren aus der Gruppe umfassend Vinylester von unverzweigten oder verzweigten Alkylcarbonsäuren mit 1 bis 10 C-Atomen, Methacrylsäureester und Acrylsäureester von unverzweigten oder verzweigten Alkoholen mit 1 bis 12 C-Atomen, Diene wie Butadien oder Isopren, Olefine wie Ethen oder Propen, Vinylaromaten wie Styrol, Methylstyrol, Vinyltoluol, und Vinylhalogenide wie Vinylchlorid in den angegebenen Mengen copolymerisiert.

Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von alpha-verzweigten Monocarbonsäuren mit 5 bis 10 C-Atomen, beispielweise VeoVa9, VeoVa10 (Handelsnamen der Fa. Shell). Besonders bevorzugt ist Vinylacetat.

Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, t-Butylacrylat, n-Butylmethacrylat, t-Butylmethacrylat, 2-Ethylhexylacrylat. Besonders bevorzugt sind Methylacrylat, Methylmethacrylat, n-Butylacrylat und 2-Ethylhexylacrylat.

Gegebenenfalls können noch 0.05 bis 10.0 Gew%, bezogen auf das Gesamtgewicht der Monomeren, Hilfsmonomere aus der Gruppe umfassend ethylenisch ungesättigte Mono- und Dicarbonsäuren und deren Amide, wie Acrylsäure, Methacrylsäure, Maleinsäure, Fumarsäure, Itaconsäure, Acrylamid, Methacrylamid; ethylenisch ungesättigte Sulfonsäuren bzw. deren Salze, vorzugsweise Vinylsulfonsäure, 2-Acrylamido-propansulfonat und N-Vinylpyrrolidon copolymerisiert werden.

Weitere Beispiele für Hilfsmonomere in den angegebenen Mengen sind hydrophobierende und anvernetzende Alkoxysilan-funktionelle Monomere wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Methoxy-, Ethoxy-, Methoxyethylen-, Ethoxyethylen-, Methoxypropylenglykolether- und Ethoxypropylenglykolether-Reste enthalten sein können. Bevorzugt werden Vinyltriethoxysilan und gamma-Methacryloxypropyltriethoxysilan.

Weitere Beispiele für Hilfsmonomere in den angegebenen Mengen sind Zusatzvernetzer wie Acrylamidoglykolsäure (AGA), Methacrylamidoglykolsäuremethylester (MAGME), N-Methylolacrylamid (NMA), N-Methylolmethacrylamid (NMMA), N-Methylolallylcarbamat, Alkylether von N-Methylolacrylamid oder N-Methylolmethacrylamid sowie deren Isobutoxyether oder n-Butoxyether.

Die Polymerzusammensetzung wird im allgemeinen so gewählt, daß eine Glasübergangstemperatur Tg von -30°C bis +40°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = X₁/Tg₁ + x₂/Tg₂ + ... + xₙ/Tgₙ, wobei xₙ für den Massebruch (Gew%/100) des Monomers n steht, und Tgₙ die Glasübergangstemperatur in Grad Kelvin des Homopolymers des Monomer n ist. Tg-Werte für Homopolymerisate sind in Polymer Handbook 3nd Edition, J. Wiley & Sons, New York (1989) aufgeführt.

Bevorzugte Comonomergemische enthalten neben dem Comonomer b) in der angegebenen Menge noch:
Vinylacetat,
Vinylacetat und Ethylen mit 30 bis 95 Gew% Vinylacetat und einem Ethylengehalt von 1 bis 60 Gew%;
Ethylen und Vinylchlorid mit einem Ethylengehalt von 1 bis 40 Gew% und einem Vinylchlorid-Gehalt von 20 bis 90 Gew%;
Vinylacetat und weitere Vinylester mit 30 bis 75 Gew% Vinylacetat und 1 bis 50 Gew% eines oder mehrerer copolymerisierbarer Vinylester aus der Gruppe umfassend Vinyllaurat, Vinylpivalat, Vinyl-2-ethylhexansäureester, Vinylester einer alpha-verzweigten Carbonsäure mit 5 bis 10 C-Atomen, gegebenenfalls noch 1 bis 40 Gew% Ethylen;
Vinylacetat und Acrylsäureester mit 30 bis 90 Gew% Vinylacetat und 1 bis 60 Gew% Acrylsäureester, insbesonders n-Butylacrylat oder 2-Ethylhexylacrylat, gegebenenfalls noch 1 bis 40 Gew% Ethylen;
Vinylacetat und Acrylsäureester mit 30 bis 75 Gew% Vinylacetat, 1 bis 30 Gew% Acrylsäureester, insbesonders n-Butylacrylat oder 2-Ethylhexylacrylat, gegebenenfalls noch 1 bis 40 Gew% Ethylen;
n-Butylacrylat oder 2-Ethylhexylacrylat;
Methylmethacrylat und n-Butylacrylat und/oder 2-Ethylhexylacrylat;
Vinylchlorid und Acrylsäureester, insbesonders n-Butylacrylat oder 2-Ethylhexylacrylat;
Styrol und Butadien mit einem Styrol-Gehalt von 10 bis 70 Gew%;
Styrol und Acrylsäureester wie n-Butylacrylat oder 2-Ethylhexylacrylat mit einem Styrol-Gehalt von jeweils 10 bis 70 Gew%.
Die Angaben in Gew% addieren sich dabei mit dem Anteil an Comonomer b) und gegebenenfalls dem Anteil an Hilfsmonomer auf 100 Gew% auf.

Am meisten bevorzugt wird die Copolymerisation von Vinylacetat und 2 bis 15 Gew%, bezogen auf das Gesamtgewicht der Comonomeren, eines Vinylesters von alpha-verzweigten, tertiären Monocarbonsäuren mit 11 C-Atomen, und die Copolymerisation von 30 bis 95 Gew% Vinylacetat, 1 bis 60 Gew% Ethylen und 2 bis 15 Gew%, bezogen auf das Gesamtgewicht der Comonomeren, eines Vinylesters von alpha-verzweigten, tertiären Monocarbonsäuren mit 11 C-Atomen, wobei in den genannten Fällen gegebenenfalls noch die oben beschriebenen Hilfsmonomere copolymerisiert werden können.

Die Herstellung nach dem Emulsionspolymerisationsverfahren wird in herkömmlichen Reaktoren oder Druckreaktoren in einem Temperaturbereich von 30°C bis 80°C durchgeführt und mit den für die Emulsionspolymerisation üblicherweise eingesetzten Methoden eingeleitet. Im Falle der Copolymerisation von gasförmigen Monomeren wie Ethylen wird vorzugsweise bei einem Druck von 5 bis 85 bar_{abs}. gearbeitet. Die Initiierung erfolgt mittels der gebräuchlichen, zumindest teilweise wasserlöslichen Radikalbildner, die vorzugsweise in Mengen von 0.01 bis 3.0 Gew% bezogen auf das Gesamtgewicht der Monomeren, eingesetzt werden. Beispiele hierfür sind Natriumpersulfat, Wasserstoffperoxid, t-Butylperoxid, t-Butylhydroperoxid; Kaliumperoxodiphosphat, Azobisisobutyronitril. Gegebenenfalls können die genannten radikalischen Initiatoren auch in bekannter Weise mit 0.01 bis 0.5 Gew%, bezogen auf das Gesamtgewicht der Monomeren, Reduktionsmittel kombiniert werden. Geeignet sind zum Beispiel Alkaliformaldehydsulfoxylate und Ascorbinsäure. Bei der Redoxinitiierung werden dabei vorzugsweise eine oder beide Redox-Katalysatorkomponenten während der Polymerisation dosiert.

Die Copolymerisation erfolgt in Gegenwart von Polyvinylalkohol als Schutzkolloid, im allgemeinen in einer Menge von 0.1 bis 15 Gew%, vorzugsweise 1 bis 10 Gew%, bezogen auf das Gesamtgewicht der Monomere. Bevorzugt werden teilverseifte Polyvinylalkohole mit einem Gehalt von 75 bis 100 Mol%, besonders bevorzugt 78 bis 95 Mol%, Vinylalkoholeinheiten und einer Höppler-Viskosität von 3 bis 60 mPas (4 %-ige wässrige Lösung, Methode nach Höppler gemäß DIN 53015).

Die Copolymerisation wird bevorzugt ohne Emulgator durchgeführt; es könne aber auch alle üblicherweise bei der Emulsionspolymerisation verwendeten Emulgatoren eingesetzt werden. Geeignete Emulgatoren sind sowohl anionische, kationische als auch nichtionische Emulgatoren, in den dafür üblichen Mengen von 0.5 bis 6 Gew%, bezogen auf das Gesamtgewicht der Monomeren. Der für die Polymerisation gewünschte pH-Bereich, der im allgemeinen zwischen 2.5 und 10, vorzugsweise 3 und 8, liegt, kann in bekannter Weise durch Säuren, Basen und übliche Puffersalze, wie Alkaliphosphate oder Alkalicarbonate, eingestellt werden. Zur Molekulargewichtseinstellung können bei der Polymerisation die üblicherweise verwendeten Regler, zum Beispiel Mercaptane, Aldehyde und Chlorkohlenwasserstoffe zugesetzt werden.

Die Polymerisation kann, unabhängig vom gewählten Polymerisationsverfahren, diskontinuierlich oder kontinuierlich, mit oder ohne Verwendung von Saatlatices, unter Vorlage aller oder einzelner Bestandteile des Reaktionsgemisches, oder unter teilweiser Vorlage und Nachdosierung der oder einzelner Bestandteile des Reaktionsgemisches, oder nach dem Dosierverfahren ohne Vorlage durchgeführt werden. Der Festgehalt der so erhältlichen Dispersion beträgt 20 bis 70 %.

Die Trocknung der Dispersion kann mittels Sprühtrocknung, Gefriertrocknung oder Wirbelschichttrocknung erfolgen. Bevorzugt wird die Sprühtrocknung in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 55°C bis 100°C, bevorzugt 65°C bis 90°C, je nach Anlage, Tg des Harzes und gewünschtem Trocknungsgrad, gewählt.

Zur Sprühtrocknung wird die Dispersion des Polymerisats mit einem Festgehalt von vorzugsweise 20 % bis 70 % gemeinsam mit Schutzkolloiden als Verdüsungshilfe versprüht und getrocknet werden. Als Schutzkolloide können dabei beispielsweise teilverseifte Polyvinylalkohole, Polyvinylpyrrolidone, Stärken, Melaminformaldehydsulfonate, Naphthalinformaldehydsulfonate eingesetzt werden. Bevorzugt werden bei diesem Verfahrensschritt 5 bis 20 Gew% Schutzkolloid, bezogen auf das Polymerisat, zugesetzt. Gegebenenfalls können noch Zusätze dem Polymerpulver zugegeben werden. Beispiele für Zusatzstoffe zur Modifizierung sind Antiblockmittel, Farbstoffe, Pigmente, Weichmacher, Verfilmungshilfsmittel, Antischaummittel, Katalysatoren, Rheologiehilfsmittel, Verdickungsmittel, Haftmittel umd Emulgatoren.

Die wässrigen Dispersionen und in Wasser redispergierbaren Redispersionspulver eignen sich als Papierklebstoffe, Verpakkungsklebstoffe, Buchbindeklebstoffe, Holzklebstoffe, Parkettklebstoffe, als Klebemittel für Fasermaterialien.

Für diese Anwendungen können die Dispersionen bzw. Pulver mit den entsprechenden Zusatzstoffen modifiziert werden. Geeignete Zusatzstoffe sind Füllstoffe wie Kreide oder Gips. Weiter können Netzmittel, Dispergiermittel, Verdicker, Entschäumer und/oder Konservierungsstoffe zugegeben werden.

Überraschend ist die verbesserte Adhäsion der Klebrohstoffe auf unterschiedlichen Substraten, die bereits bei Einbau geringer Mengen an VeoVa11 in das Copolymer beobachtet wird. Um so überraschender ist es, daß bei deutlich gesteigerter Adhäsion die Kohäsion der Klebung nur geringfügig abnimmt. Durch Verwendung von VeoVa9 oder VeoVa10 läßt sich keine Verbesserung der Adhäsion erzielen.

Die nachfolgenden Beispiele dienen zur weiteren Erläuterung der Erfindung:

### Vergleichsbeispiel 1:

In einem Druckreaktor wurden 5 Gewichtsteile eines teilverseiften Polyvinylalkohols mit einem Hydrolysegrad von 90 Mol%, 104 Gewichtsteile Wasser und 100 Gewichtsteile Vinylacetat vorgelegt. Es wurde auf 50°C aufgeheizt und Ethylen mit einem Druck von 50 bar aufgepreßt. Nach Erreichen des Temperaturgleichgewichts wurde eine Lösung von 0.2 Gewichtsteilen Kaliumpersulfat in 5.8 Gewichtsteilen Wasser und eine Lösung von 0.1 Gewichtsteilen Ascorbinsäure in 5.8 Gewichtsteilen Wasser zudosiert. Nach Beendigung der Polymerisation resultierte eine Dispersion mit einem Feststoffgehalt von 55 % und einer Copolymerzusammensetzung von 18 Gew% Ethylen und 82 Gew% Vinylacetat.

### Beispiele 2 bis 9:

Analog der Vorgehensweise in Vergleichsbeispiel 1 wurden die in Tabelle 1 angegebenen Mengen an Vinylacetat, Ethylen und eines Vinylesters einer alpha-verzweigten, tertiären Monocarbonsäure mit 11 C-Atomen (VeoVall, Handelsname der Firma Shell) copolymerisiert.

### Vergleichsbeispiele 10 und 11:

Analog der Vorgehensweise in Vergleichsbeispiel 1 wurden die in Tabelle 1 angegebenen Mengen an Vinylacetat, Ethylen und eines Vinylesters einer alpha-verzweigten, tertiären Carbonsäure mit 9 C-Atomen (VeoVa9, Handelsname der Firma Shell; Vergleichsbeispiel 10), und Vinylacetat, Ethylen und eines Vinylesters einer alpha-verzweigten, tertiären Monocarbonsäure mit 10 C-Atomen (VeoVa10, Handelsname der Firma Shell; Vergleichsbeispiel 11) copolymerisiert.

### Vergleichsbeispiele 12 und 13:

Analog der Vorgehensweise in Vergleichsbeispiel 1 wurden die in Tabelle 1 angegebenen Mengen an Vinylacetat und Ethylen copolymerisiert, wobei in Vergleichsbeispiel 12 mit einem Ethylendruck von 60 bar und in Vergleichsbeispiel 13 mit einem Ethylendruck von 70 bar gearbeitet wurde.

Zur Testung wurde ein Teil der in den Beispielen und Vergleichsbeispielen erhaltenen Dispersionen zur weiteren Testung als Klebemittel eingesetzt. Der Rest wurde unter Zugabe von 6 Gew% teilverseiftem Polyvinylalkohol, bezogen auf Polymeranteil, in einem Nubilosa-Sprühtrockner bei einer Austrittstemperatur von 80°C und einem Preßluftdruck von 4 bar verdüst.

Zur Testung der Dispersionen, der Dispersionspulver und der Klebemittel wurden folgende Testverfahren eingesetzt:

### Viskositätsbestimmung:

Die Viskosität der Dispersionen wurde als Brookfield-Viskosität mittels eines Brookfield-Viskosimeters bei 25°C und bei 20 U/min bestimmt.

### Siebrückstandsbestimmung:

Zur Bestimmung des Siebrückstandes wurde analog DIN 53786 verfahren. Hierzu wog man 100 g Dispersion ein, verdünnte gegebenenfalls mit Tensid-haltigem Wasser auf ein Volumen von 1 Liter und goß die verdünnte Dispersion durch ein Sieb mit einer Maschenweite von 60 µm bzw. 150µm. Man spülte bis das Wasser klar ablief und alle anhaftenden Dispersionsreste außer dem Grobanteil abgespült waren. Das Sieb wurde bei 105°C bis zur Gewichtskonstanz getrocknet und anschließend auf 0.001 g genau gewogen. Die Menge des verbliebenen Rückstandes wurde in ppm bezogen auf Dispersion angegeben.

### Bestimmung der Anzuggeschwindigkeit:

Während des Abbindevorganges einer Dispersionsklebstoffes nimmt die Festigkeit der Klebung zu. Der Abbindevorgang kann durch die Änderung der Festigkeit einer Klebfuge in Abhängigkeit von der Zeit beschrieben werden. Dazu wurde die Zeit bestimmt, bei der einer Verklebungsfläche von 1 cm² einer beschleunigungsfreien Belastung von 2 N senkrecht zur Klebfläche gerade standhält. Der Prüfvorgang wurde solange wiederholt, bis die kürzeste Abbindezeit auf ± 0.2 sec. eingegrenzt war.

### Bestimmung der Haftungssumme:

Papierteststreifen (10 x 50 mm) wurden mit je 50 µm-Schichtdicke der zu prüfenden Klebstoffe bestrichen und auf 7 verschiedene Kunststoffolien geklebt. Nach 2 Stunden Trockenzeit wurde die Teststreifen abgezogen und dabei die Haftfestigkeit wie folgt beurteilt:
1 = sehr gute Haftung, 100 % Materialausriß
2 = gute Haftung, überwiegend Materialausriß
3 = Haftung, Trennung mit Widerstand ohne Materialausriß
4 = keine Haftung, Abplatzen
Durch Addition der 7 Beurteilungswerte wurde die Haftungssumme erhalten.

### Bestimmung der Wärmestandfestigkeit:

Es wurden 6 Prüfkörper mit einer verklebten Fläche von je 9 cm² hergestellt. Dazu versah man je zwei Sperrholzstäbchen (125 x 30 x 4 mm) auf einer Länge von 30 mm mit einem Klebstoffauftrag von 100 µm-Schichtdicke, lagerte diese geschlossen 1 Minute ohne Preßdruck und anschließend 30 min mit einem Preßdruck von 0,2 N/mm². Die Prüfkörper wurden daraufhin 7 Tage bei 23°C und 50 % Luftfeuchtigkeit gelagert und vor der Prüfung 4 Stunden bei 70 ± 0,5°C in einem Umlufttrockenschrank temperiert. Nach der Lagerung wurde mit den Prüfkörpern die Klebefestigkeit im Zug-Scher-Versuch ermittelt, wobei mit einer Zugprüfmaschine mit 50 mm/min Abzugsgeschwindigkeit die verklebten Prüfkörper auseinandergezogen und bis zum Bruch belastet wurden. Beim Bruch wurde die dabei auftretende Maximalkraft F_{Max} ermittelt. Die Klebfestigkeit T errechnet sich aus T = F_{Max}/A, wobei A die geklebte Prüffläche in mm² ist.

### Die Testergebnisse sind in Tabelle 1 zusammengefaßt:

Der Vergleich der erfindungsgemäßen Klebmittel aus Tabelle 1 (Beispiel 2 bis 9) mit Vergleichsbeispiel 1 zeigt die Effekte, die auf den erfindungsgemäßen Einsatz von VeoVa 11 zurückgeführt werden können. So wird bereits bei Einsatz von 1 bzw. 2 Gew% VeoVa 11 ein positiver Einfluß auf die Anzuggeschwindigkeit beobachtet, wobei die übrigen anwendungstechnischen Eigenschaften unbeeinflußt bleiben. Ab einer VeoVa11-Einsatzmenge von 3 Gew% läßt sich eine noch deutlicher gesteigerte Haftung (Haftungssumme von 16 statt 20) beobachten, die durch Erhöhen der eingesetzten VeoVa 11-Menge über 15 Gew% hinaus kaum mehr weiter verbessert werden kann.

Der von den eingesetzten VeoVa11-Mengen ausgehende positive Effekt auf die Haftung kann bei Verwendung der analogen Versaticsäureester VeoVa9 oder VeoVa10 nicht beobachtet werden (Vergleichsbeispiele 10 und 11). Beim Einsatz größerer Mengen an Ethylen (Vergleichsbeispiele 12 und 13) lassen sich zwar verbesserte Haftungen beobachten, nachteilig dabei ist aber die ausgeprägte Abnahme der Wärmestandfestigkeit, die mit der Zunahme der Haftung einhergeht. Auch wurde bei den Vergleichsbeispielen 12 und 13 eine wesentlich verlangsamte Anzuggeschwindigkeit beobachtet.

Im Vergleich zu VeoVa9 und VeoVa10 läßt sich durch den Einsatz von VeoVall die Haftung von Vinylacetat/Ethylen-Copolymeren auf unterschiedlichen Substraten positiv beeinflussen, ohne daß dabei dramatische Einbußen der Wärmestandfestigkeit zu beobachten sind, wie es z.B. bei der Haftungsverbesserung durch Einbau höherer Ethylenmengen in das Polymer der Fall ist.

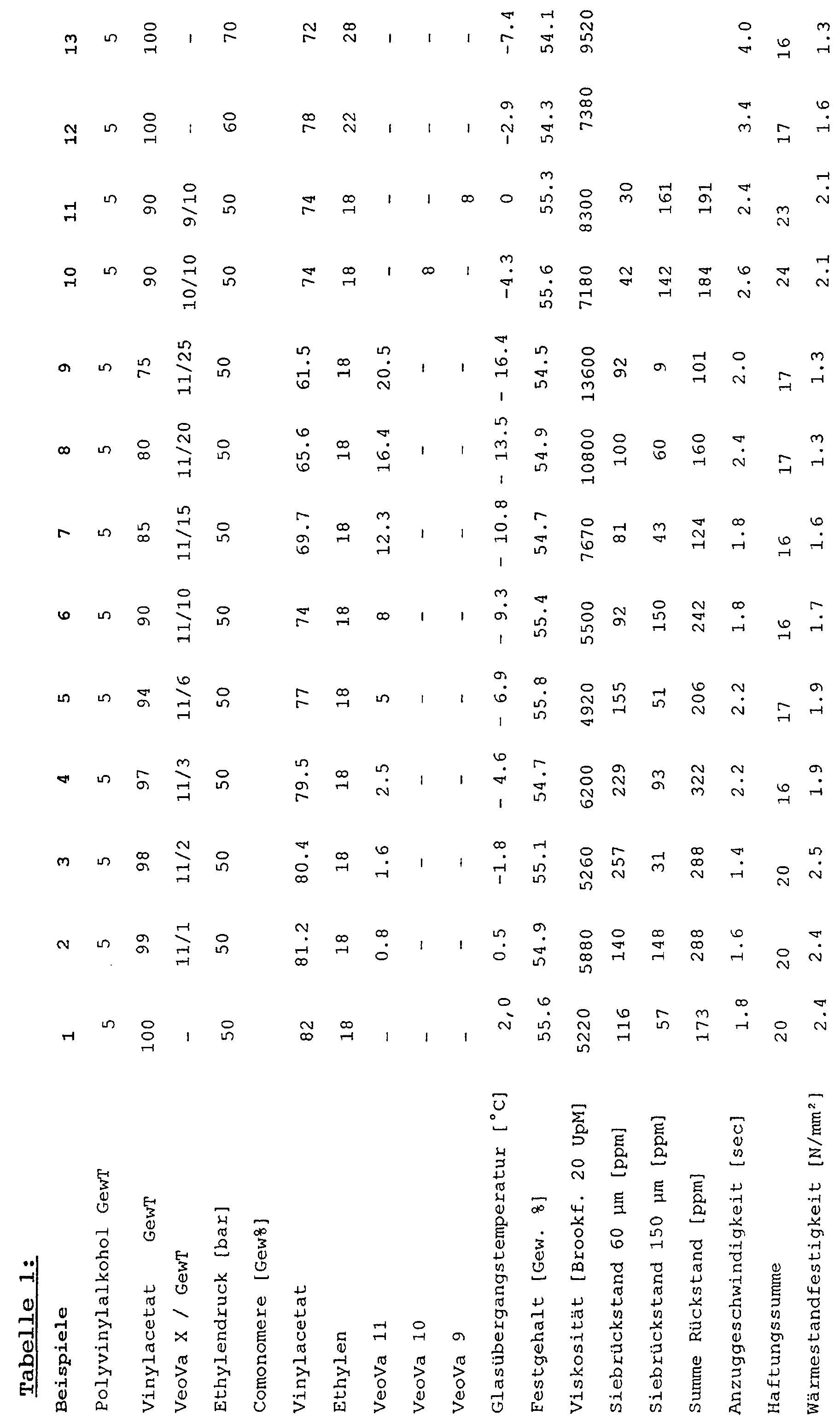

## Patentansprüche

1. Verwendung von Copolymerisaten, in Form deren wässrigen Dispersionen oder in Wasser redispergierbaren Dispersionspulver, welche durch Emulsionspolymerisation, und gegebenenfalls Trocknung der damit erhältlichen Dispersion, einer Comonomermischung enthaltend
a) ein oder mehrere Monomere aus der Gruppe der Vinylester von unverzweigten und verzweigten Carbonsäuren mit 1 bis 10 C-Atomen, der Ester der Acrylsäure und Methacrylsäure mit verzweigten und unverzweigten Alkoholen mit 1 bis 12 C-Atomen, Vinylaromaten, Vinylhalogenide und alpha-Olefine und
b) 0.01 bis 50 Gew%, bezogen auf das Gesamtgewicht der Comonomeren, eines Vinylesters von alpha-verzweigten, tertiären Monocarbonsäuren mit 11 C-Atomen, in Gegenwart von
c) 0.1 bis 15 Gew%, bezogen auf das Gesamtgewicht der Comonomeren, Polyvinylalkohol, erhalten werden,
als Klebemittel mit verbesserter Adhäsion für Papierklebstoffe, Verpackungsklebstoffe, Buchbindeklebstoffe, Holzklebstoffe und als Klebemittel für Fasermaterialien.

2. Verwendung nach Anspruch 1, dadurch gekennzeichnet, daß 2 bis 15 Gew%, bezogen auf das Gesamtgewicht der Comonomeren, eines Vinylesters von alpha-verzweigten, tertiären Monocarbonsäuren mit 11 C-Atomen copolymerisiert werden.

3. Verwendung nach Anspruch 1 bis 2, dadurch gekennzeichnet, daß als Comonomer a) Vinylacetat copolymerisiert wird.

4. Verwendung nach Anspruch 1 bis 2, dadurch gekennzeichnet, daß als Comonomer a) 30 bis 95 Gew% Vinylacetat und 1 bis 60 Gew% Ethylen copolymerisiert werden.

5. Verwendung nach Anspruch 1 bis 4, dadurch gekennzeichnet, daß in Gegenwart eines teilverseiften Polyvinylalkohols mit einem Gehalt von 75 bis 100 Mol% Vinylalkoholeinheiten und einer Höppler-Viskosität von 3 bis 60 mPas (4 %-ige wässrige Lösung, Methode nach Höppler gemäß DIN 53015) polymerisiert wird.

6. Verwendung nach Anspruch 1 bis 5 als Parkettklebstoffe.

## Revendications

1. Utilisation de copolymères sous forme de leurs dispersions aqueuses ou de poudres de dispersion redispersables dans l'eau, qui sont obtenues par polymérisation en émulsion et éventuellement séchage de la dispersion ainsi obtenue d'un mélange de comonomères comprenant:
a) un ou plusieurs monomères parmi le groupe constitué des esters vinyliques d'acides carboxyliques non ramifiés et ramifiés ayant de 1 à 10 atomes de carbone, des esters de l'acide acrylique et de l'acide méthacrylique avec des alcools ramifiés et non ramifiés ayant de 1 à 12 atomes de carbone, de composés vinylaromatiques, d'halogénures de vinyle et d'alpha-oléfines, et
b) de 0,01 à 50% en poids, par rapport au poids total des comonomères, d'un ester vinylique d'acides monocarboxyliques tertiaires ramifiés en alpha ayant 11 atomes de carbone,
en présence de
c) de 0,1 à 15% en poids, par rapport au poids total des comonomères, d'alcool polyvinylique,
en tant qu'agents adhésifs à adhésion améliorée pour adhésifs pour papier, adhésifs d'emballage, adhésifs de reliure, adhésifs pour bois et en tant qu'agents adhésifs pour matières fibreuses.

2. Utilisation selon la revendication 1, caractérisée en ce que l'on copolymérise de 2 à 15% en poids, par rapport au poids total des comonomères, d'un ester vinylique d'acides monocarboxyliques tertiaires ramifiés en alpha ayant 11 atomes de carbone.

3. Utilisation selon les revendications 1 à 2, caractérisée en ce que l'acétate de vinyle est copolymérisé en tant que comonomère a).

4. Utilisation selon les revendications 1 à 2, caractérisée en ce que de 30 à 95% en poids d'acétate de vinyle et de 1 à 60% en poids d'éthylène sont copolymérisés en tant que comonomère a).

5. Utilisation selon les revendications 1 à 4, caractérisée en ce que la polymérisation est réalisée en présence d'un alcool polyvinylique partiellement estérifié ayant une teneur de 75 à 100% en moles de motifs alcool vinylique et une viscosité Höppler de 3 à 60 mPas (solution aqueuse à 4%, méthode de Hôppler conformément à DIN 53015).

6. Utilisation selon les revendication 1 à 5 en tant qu'adhésifs pour parquets.

## Claims

1. Use of copolymers, in the form of their aqueous dispersions or water-redispersible dispersion powders, by emulsion polymerization which are obtained, with or without drying of the dispersion obtainable by this process, of a comonomer mixture comprising
a) one or more monomers from the group consisting of the vinyl esters of unbranched and branched carboxylic acids of 1 to 10 carbon atoms, the esters of acrylic acid and methacrylic acid with branched and unbranched alcohols of 1 to 12 carbon atoms, vinylaromatic compounds, vinyl halides and alpha-olefins, and
b) from 0.01 to 50% by weight, based on the overall weight of the comonomers, of a vinyl ester of alpha-branched tertiary monocarboxylic acids of 11 carbon atoms,
in the presence of
c) from 0.1 to 15% by weight, based on the overall weight of the comonomers, of polyvinyl alcohol, as adhesives having improved adhesion for paper adhesives, packaging adhesives, bookbinding adhesives, wood adhesives and as adhesives for fiber materials.

2. Use according to Claim 1, characterized in that from 2 to 15% by weight, based on the overall weight of the comonomers, of a vinyl ester of alpha-branched tertiary monocarboxylic acids of 11 carbon atoms are copolymerized.

3. Use according to Claim 1 or 2, characterized in that vinyl acetate is copolymerized as comonomer a).

4. Use according to Claim 1 or 2, characterized in that from 30 to 95% by weight of vinyl acetate and from 1 to 60% by weight of ethylene are copolymerized as comonomer a).

5. Use according to any of Claims 1 to 4, characterized in that polymerization is conducted in the presence of a partially hydrolysed polyvinyl alcohol containing from 75 to 100 mol% of vinyl alcohol units and having a Höppler viscosity of from 3 to 60 mPas (4% strength aqueous solution, Höppler method in accordance with DIN 53015)

6. Use according to any one of Claims 1 to 5 as parquet adhesives.
